# EUROPÄISCHE PATENTSCHRIFT

(11) **EP 1 089 220 B1**
(45) Veröffentlichungstag und Bekanntmachung des Hinweises auf die Patenterteilung: **11.04.2001**
(21) Anmeldenummer: 99119505.8
(22) Anmeldetag: 01.10.1999
(51) Int. Cl.: G06K 19/077

(54) **Mehrschichtige Laminatbahn mit integrierten RFID-Transpondern, insbesondere in Rollenform**
Multilayer laminated substrate in web form with integrated RF-ID transponders, in particular in roll form
Bande multicouches de matériau laminé comprenant des transpondeurs RF-ID, en particulier en rouleau

(43) Veröffentlichungstag der Anmeldung: 04.04.2001
(73) Patentinhaber: Sihl GmbH, 52355 Düren (DE)
(72) Erfinder: Högenett, Helmut, 52385 Nideggen (DE); Liebler, Ralf, Dr., 52372 Kreuzau (DE); Robertz, Bernd, Dr., 52428 Jülich (DE); Wiederrecht, Hartmut, 52355 Düren (DE)
(74) Vertreter: Sternagel, Fleischer, Godemeyer & Partner Patentanwälte

(56) Entgegenhaltungen:
- EP-A- 0 704 816
- DE-C- 19 602 821
- GB-A- 2 267 683
- US-A- 5 877 544

## Beschreibung

Die Erfindung betrifft mehrschichtige Laminatbahnen, insbesondere in Rollenform oder in Form von Stapeln, die in Längsrichtung der Bahn eine Vielzahl von hintereinander angeordneten Einheiten von Etiketten, Aufklebern, Anhängern oder Zutrittsberechtigungsscheinen mit jeweils darin integrierten RFID-Transpondern aufweisen.

Klebeetiketten, Anhängeetiketten, Zutrittsberechtigungsscheine (Eintrittskarten) werden häufig in Rollenform für den Gebrauch konfektioniert. Wenn in derartige Laminatbahnen sogenannte RFID-Transponder integriert sind, beispielweise wie in EP-A-595 549 beschrieben, wird das Aufwickeln der Bahnen zu Rollen problematisch, da die Laminatbahn an der Stelle, an der sich der Chip des RFID-Transponders befindet, gegenüber der Umgebung verdickt ist. Werden die Bahnen zu Rollen mit geringer Spannung aufgewickelt, neigen die Rollen zum seitlichen Teleskopieren und sind für die Handhabung nicht ausreichend stabil. Werden die Bahnen mit größerer Spannung zu festen Rollen gewickelt, besteht die Gefahr der Beschädigung der RFID-Transponder, beispielsweise durch Brechen des Chips oder von elektrischen Verbindungsstellen des Chips mit der Antenne. Bei empfindlichen Etikettenoberflächen, beispielsweise solchen mit wärmeempfindlicher Aufzeichnungsschicht, können an verdickten Bahnstellen Schäden der Etikettenoberfläche entstehen.

Aus US-A-5,877,544 ist die Anordnung von größeren Halbleiterchips für IC-Karten in einer mehrschichtigen Laminatbahn mit einer isolierenden Trägerschicht beschrieben. Die Chips stehen in elektrischer Verbindung mit Zonen für elektrische Kontakte zum Eingeben Lesen von Informationen in den Chip und Lesen von im Chip gespeicherten Daten.

In DE-C-196 02 821 ist ein Verfahren zur Herstellung von mehrschichtigen Datenkarten mit Chips beschrieben, bei dem eine nivellierende Ausgleichsschicht eingebracht wird, um die Dicke des Chips im Bereich außerhalb des Chips auszugleichen.

In EP-A-704 816 ist ein RFID-Transponder beschrieben, bei dem auf einem dielektrischen Träger eine Antenne und ein damit elektrisch verbundener Chip angeordnet sind. Die weder Antenne noch Chip aufweisende Oberfläche des dielektrischen Trägers kann selbstklebend ausgerüstet sein, wobei in diesem Falle die Haftkleberschicht mit einer wieder ablösbaren Schutzschicht abgedeckt ist.

Zum Dickenausgleich wurden bereits zahlreiche Vorschläge gemacht, z.B. Einbringen von Passepartouts, voluminösen Polsterfolien, Prägen von Teilen der Bahnen.

Alle Vorschläge haben den Nachteil, daß zusätzliche Materialien benötigt werden, die die spätere Entsorgung der Bahnreste erschweren. Prägungen sind nur bei ausreichend dicken Bahnträgerschichten möglich.

Aufgabe der Erfindung ist es, einen Aufbau von mehrschichtigen Laminatbahnen von Etiketten, Aufklebern, Anhängern oder Zutrittsberechtigungsscheinen mit einer Vielzahl von Einheiten mit darin integrierten RFID-Transpondern zu schaffen, der das Aufrollen der Bahn zu stabilen Rollen mit festen Rändern oder Stapeln ermöglicht.

Diese Aufgabe wird gelöst durch Etiketten, Aufkleber. Anhänger oder Zutrittsberechtigungsscheine in Form einer mehrschichtigen Laminatbahn, die in ihrer Längsrichtung eine Vielzahl von hintereinander angeordneten Einheiten von Etiketten, Aufklebern, Anhängern, Zutrittsberechtigungsscheinen mit jeweils darin integrierten RFID-Transpondern mit je einem Chip aufweist und die an oder in der Nähe der Laminatbahnkanten mindestens auf einer Seite des Chips auf der Bahnoberfläche oder zwischen laminierten Schichten in Längsrichtung der Laminatbahn verlaufende Verdickungsstreifen enthält, deren Dicke ein Bruchteil der Dicke des RFID-Transponders an der Stelle, an der der Chip angeordnet ist, beträgt.

Völlig überraschend wurde gefunden, daß ein vollständiger Dickenausgleich im Bereich eines oder beider Bahnränder im Vergleich zum Bereich mit den Chips nicht erforderlich ist, um die Bahn zu Rollen aufzuwickeln, die im Kantenbereich ausreichend fest sind, um seitliches Teleskopieren der Rollen auszuschließen und im mittleren Bereich eine geringere Bahnspannung aufweisen, d.h. die Rolle weicher gewickelt ist, so daß das Risiko von Beschädigungen der Bahnoberflächen und/oder der RFID-Transponder wesentlich verringert ist. Auch das Ausbilden von stabilen Stapeln, beispielsweise in Zick-Zack-Faltung ist erleichtert.

Bei der im Vergleich zur Länge der Einheit, beispielsweise einer Etiketteneinheit, in Bahnlaufrichtung geringen Länge des Chips ist die Wahrscheinlichkeit, daß in der Rolle Chip über Chip zu liegen kommt, gering.

Es können viele Lagen aufgewickelt werden, ohne daß Chip über Chip liegt und in diesem Bereich eine zu hohe Bahnspannung in der Rolle eintritt, wenn die Bahnspannung im Randbereich ausreichend ist, um feste stabile Rollenränder auszubilden. Eine in Längsrichtung im Randbereich durchgehende oder unterbrochene geringfügige Verdickung der Laminatbahn erlaubt es, Rollen im Randbereich fest zu wickeln und gleichzeitig im Bahnzentrum weich, d.h. mit geringer Bahnspannung, aufzuwickeln.
Die Wickelhärte kann über die beim Aufrollen von Laminatbahnen verwendete Bahnspannung eingestellt werden. Bahnspannungen von 250 N/m, vorzugsweise von 350 N/m bis 500 N/m können verwendet werden.
Wicklungen mit Bahnspannung > 300 N/m ergeben harte Wicklung, während Wickeln mit Bahnspannung < 300 N/m als weiche Wicklung eingestuft werden.
Hersteller von RFID-Transpondern mit Trägerfolie empfehlen beim Aufrollen und Abrollen von Bahnen der RFID-Tranponder von maximal 98.1 N/m einzuhalten.
Die elektronischen Schaltelemente oder Chips von RFID-Transpondern können Dicken von 20 *µ*m bis 300 *µ*m aufweisen. Einschließlich Trägerfolie und gegebenenfalls sogenanntem "glop top" kann die Dicke der RFID-Transponder im Bereich des Chips 50 *µ*m bis 600 µm betragen.

Verdickungen von 1/5 bis 1/4 der Dicke des RFID-Transponders an der Stelle an der der Chip angeordnet ist sind bereits ausreichend, um die Bahnspannung im Randbereich gegenüber dem Bahnzentrum so zu erhöhen, daß im Randbereich fest gewickelte Rollen mit stabilen Rändern entstehen und deren Mittelbereich weich gewickelt ist.

Die erfindungsgemäßen Laminatbahnen weisen mindestens eine oder mehrere Trägerschichten aus Kunststoff, Papier, faserverstärktem Kunststoff, fasterverstärktem Papier und eine weitere Schicht auf, die fest miteinander verbunden sind, und die RFID-Transponder jeder Einheit sind durch Anordnen zwischen den Schichten, d.h. Trägerschichten oder der Trägerschicht und der weiteren Schicht in die mehrschichtige Laminatbahn integriert.
Die weitere Schicht der Laminatbahn kann übliches kaltsiegelndes Material, eine Kunststoffolie, eine Papierbahn, eine Schmelzkleberschicht sein.
Die weitere Schicht kann aber auch eine Haftkleberschicht sein, die mit einer von der Haftkleberschicht wieder abtrennbaren Deckschicht abgedeckt ist. Derartige Deckschichten werden auch als Liner bezeichnet. Dabei kann es sich um übliche Silicontrennpapiere oder mit Trennmitteln beschichtete/imprägnierte Papiere handeln.

Besonders bevorzugt ist die erfindungsgemäße mehrschichtige Laminatbahn in Rollenform ausgebildet, wobei die Randbereiche fester gewickelt sind als der mittlere Bereich der Rolle.
Die Messung der Härte von Stapeln von vereinzelten Laminatetiketten oder der Wickelhärte Laminatbahnrollen wird mit einer handelsüblichen Zug-Prüfmaschine ausgeführt. Die Prüffläche des zu prüfenden Prüfkörpers wird senkrecht zur Druckrichtung eines in Haltevorrichtung der Zug-Prüfmaschine eingespannten zylindrischen Prüfstempels aus Edelstahl in die Zug-Prüfmaschine auf eine Edelstahlfläche als Auflagefläche eingelegt und mit geeigneten Mitteln fest arretiert.
Der zylindrische Prüfstempel aus Edelstahl weist eine plane runde Druckfläche mit einer Größe von 5 cm² auf und wird mit konstanter Geschwindigkeit (beispielsweise 1,0 mm/Minute) gesenkt und gegen die Prüffläche gedrückt. Aufgezeichnet wird die erforderliche Kraft für die Verformung des Prüfkörpers gegen den zurückgelegten Weg der Prüfstempels nach Berührung der Oberfläche des Prüfkörpers in N/mm (entspricht dem Ausmaß der Verformung des Prüfkörpers). Nullpunkt ist der Moment des Auftreffens des Prüfstempels auf die Oberfläche des Prüfkörpers, Kraft 0 Newton, Weg 0 mm. Die Messungen können bis zu einer bestimmtem Kraft , beispiesweise 50 N ausgeführt werden, so daß bei unterschiedlichen Wickelhärten unterschiedliche Weglängen erhalten werden. Das Verhältnis der unterschiedlichen Weglängen wird als relative Wickelhärte bezeichnet. Die Messungen können aber auch bis zu einer bestimmten Verformung ausgeführt werden, so daß bei unterschiedlichen Wickelhärten oder Stapelhärten unterschiedlicher Kraftaufwand erforderlich ist. Das Verhältnis der jeweils aufgewandten Kraft ergibt ebenfalls eine relative Wickelhärte.

Bei Laminatetikettenstapeln erfolgt die Messung in der Mitte und am seitlichen Rand im Bereich der Verdickungsstreifen des Etikettenstapels. Bei Laminatbahnrollen erfolgt die Messung am seitlichen Rollenrand im Bereich der Verdickungsstreifen und in der Mitte der Rolle.

Größere Wickelhärte am Rollenrand oder Stapelhärte am Rand erfordert entweder eine größere Kraft für eine bestimmte Verformung als geringere Wickelhärte oder Stapelhärte, oder bei gleicher Kraft findet unterschiedliche Verformung des Prüfkörpers statt. Wesentlich ist das relative Verhältnis von Kraft oder Weglänge (Verformung), d.h. weich : härter. Es sollte erfindungsgemäß 1 : ≥ 1,1 betragen um eine übermäßige Belastung der RFID-Transponderchips zu vermeiden.
Beispielsweise kann das Verhältnis 1: 1,2 bis 3.0, vorzugsweise 1:1,3 bis 1,8 betragen.

Die erfindungsgemäßen Laminatbahnen können vollflächig mittlere Schichtdicken von 100 µm bis 1000 µm aufweisen, vorzugsweise beträgt die Schichtdicke der Laminatbahn von 130 µm bis 400 µm.

RFID-Transponder weisen beispielsweise auf einer Trägerfolie eine Antenne mit ein oder mehreren Windungen auf, die aus Draht ausgebildet sein können oder in Form von dünnen Metallstreifen vorliegen. In elektrischer Verbindung mit der Antenne steht ein elektronischer Schaltkreis (Chip ), der in der Lage ist, über die Antenne eingegebene Signale aufzunehmen und wiederabrufbar zu speichern. Die für den Betrieb der Schaltkreise erforderliche Energie kann simultan mit der Eingabe und/oder dem Abruf von gespeicherten Signalen drahtlos über die Antenne eingespeist werden.

Bei derartigen Transpondern, die z.B. auf flexiblen Trägerfolien geätzte Antennen aus Aluminium oder Kupfer oder gedruckte Antennen aus elektrisch leitfähigen Pasten aufweisen, ist es möglich, am Folienrand parallel zur Antennenwindung in Längsrichtung einen Metallstreifen stehen zu lassen, der den RFID-Transponder im seitlichen Randbereich gegenüber der Trägerfolie geringfügig verdickt. Bei drahtförmigen Antennen ist es bei solchen Ausführungsformen möglich, parallel zu den Antennenwindungen am Rand der Bahn einen längs durchlaufenden Draht auf der Kunststoffträgerfolie zu fixieren.

Werden solche RFID-Transponder in Laminatbahnen, deren Breite etwas breiter ist als die Breite des Folienträgermaterials des RFID-Transponders, derart integriert, daß die stehengebliebenen Metallstreifen oder der eingebrachte Metalldraht im seitlichen Randbereich der Laminatbahn angeordnet sind, reicht diese Verdickung der Laminatbahn im Randbereich bereits aus, um die Bahnspannung im Randbereich gegenüber dem Bahnzentrum zu erhöhen, so daß beim Aufwickeln der Laminatbahn feste stabile Rollenränder ausbildbar sind und gleichzeitig die Rollen in der Bahnmitte weicher gewickelt sind.

Eine andere Möglichkeit, die Laminatbahn im Randbereich zu verdicken, besteht darin, im Randbereich parallel zu den Bahnrändern durch Stanzen Perforierungen anzubringen. Die dabei jeweils entstehenden verdickten Ränder an den Stanzlöchern ergeben bei Lochreihen die erfindungsgemäßen Verdickungsstreifen mit einer Dicke eines Bruchteils der Dicke des RFID-Transponders im Bereich des Chips.
Bei einer anderen Ausführungsform der Erfindung wird mindestens ein vorzugsweise auf jeder Seite der Laminatbahn auszubildender Verdickungsstreifen durch Auftragen von Klebstoff in der erforderlichen Dicke auf eine der Schichten der Laminatbahn erzeugt. Enthält die Laminatbahn beispielsweise ein Haftkleberschicht, kann diese im Randbereich etwas dicker als im Mittelbereich der Bahn ausgebildet werden.

Es kann aber auch ein Schmelzkleberstreifen auf eine der Schichten der Laminatbahn aufgebracht werden. Anstelle eines Kleberstreifens kann auch ein Lackstreifen der gewünschten Dicke angeordnet werden.

Grundsätzlich ist es auch möglich, im Randbereich der Bahn streifenförmige Materialien, beispielsweise aus Papier oder Kunststoff, mit einzulaminieren, um die erfindungsgemäße Verdickung im seitlichen Randbereich oder den Randbereichen zu schaffen oder das Trägermaterial am Rand umzuschlagen, so daß es eine doppelte Lage ausbildet.

Bei Laminatbahnschichten, deren Dicke sich bei Einwirkung von Wärme und/oder Strahlung ändert, erfolgt die Einwirkung von Wärme oder Strahlung derart, daß gegenüber dem mittleren Bahnbereich in den Randbereichen parallel zum Rand verlaufende verdickte Streifen auftreten.

Bei solchen Schichten kann es sich beispielsweise um expandierbare Polymere handeln, die beispielsweise von Akzo Nobel Casco Products A.B. unter der Handelsbezeichnung Expancel angeboten werden, die sich bei Erwärmung auf etwa 140°C ausdehnen (aufblähen) und die erfindungsgemäß verdickten Randstreifen ausbilden.

Im Falle von Kunststoffolien als Schicht(en) in der Laminatbahn können durch Dehnen Falten erzeugt werden, die zu ausreichenden Verdickungen in den Randbereichen der Laminatbahn führen und die das feste Wickeln der Rollen an den Rändern bei gleichzeitig weichem Wickeln im Mittelbereich ermöglichen.

Die erfindungsgemäßen Laminatbahnen enthalten in der Regel eine Trägerschicht aus Kunststoff (beispielsweise eine Folie oder faserverstärkte Folie), Papier, oder faserverstärktem Papier. Die Oberseite der Trägerschicht ist häufig bedruckbar ausgebildet. Dies kann durch Aufbringen einer wärmeempfindlichen Aufzeichnungsschicht erreicht werden, die neben den üblichen Bestandteilen einen Farbbildner und einen Entwickler enthalten, so daß bei lokaler Temperatureinwirkung eine Farbbildungsreaktion abläuft.

Es können aber auch Pigmente, Bindemittel und übliche Hilfsstoffe enthaltende Beschichtungen auf die Trägerschicht aufgebracht sein, die mit bekannten üblichen Verfahren bedruckbar sind. Dies sind Siebdruck, Flexodruck, Offsetdruck, Laserdruck, Tintenstrahldruck, Thermotransferdruck und dergleichen.

Im Falle von Haftetiketten ist auf der bedruckbaren Bahnoberseite gegenüberliegenden Oberfläche der Trägerschicht eine Haftkleberschicht vorhanden, die mit einem Trennpapier oder einer Trennfolie abgedeckt ist. Im Falle von Anhängern kann die Kleberschicht in Bahnlängsrichtung Bereiche ohne Kleber aufweisen, so daß die Enden eines Anhängerstreifens, d.h. einer Einheit, beim Zusammenfügen eine Schlaufe ausbilden, auf deren Innenseite kein Kleber vorhanden ist. Bei derartigen Anhängern kann anstelle eines Haftklebers auch ein übliches kaltsiegelndes Material verwendet werden. Das hat den Vorteil, daß keine Trennpapierschicht erforderlich ist, die Enden des Anhängerstreifens beim Zusammenfügen der Kaltsiegelmaterialien jedoch fest aneinander haften.
Im Falle von Zutrittberechtigungsscheinen ist es bevorzugt, Folienschichten und/oder Papierschichten zusammenzulaminieren und dazwischen die RFID-Transponder anzuordnen.

Bei diesen Ausführungsformen kann der Verdickungsstreifen durch einen dicker ausgebildeten Klebstoffstreifen im Randbereich der Bahn erzeugt werden.

Vorzugsweise sind der (die) Verdickungsstreifen als Klebstoffstreifen, Lackstreifen, Stanzlochstreifen, am Rand eingefaltete Trägermaterialstreifen, eingefügte Materialbahnstreifen aus Papier oder Kunststoff, Falten in Kunststoffschichten, stehengebliebenen Metallstreifen von RFID-Transpondern mit Trägerfolien oder längs verlaufenden Drähten solcher RFID-Transpondern oder durch Einwirkung von Wärme/Strahlung auf Laminatschichten auszulösende Dickenveränderungen einer Schicht ausgebildet.

Die RFID-Transponder werden durch Anordnen zwischen Schichten der Laminatbahn in diese integriert.

Die erfindungsgemäßen Laminatbahnen enthalten in Längsrichtung eine Vielzahl von Einheiten mit darin integrierten RFID-Transpondern. Die Einheiten können durch quer zur Bahn verlaufende vorbereitete Trennlinien voneinander trennbar sein. Eine Einheit ist dann jeweils als Etikett, Aufkleber, Anhänger oder Zutrittsberechtigungsschein ausgebildet. Die voneinander trennbaren Einheiten können in Bahnlaufrichtung unmittelbar benachbart ausgebildet und angeordnet sein oder auch einen Abstand voneinander aufweisen. Breitere Bahnen können auch mehrere Reihen von Einheiten, die parallel zueinander angeordnet sind, enthalten. Bei den meisten Ausführungsformen ist es bevorzugt, die Einheiten durch Stanzlinien, Perforationen sichtbar zu machen und dadurch auch das Abtrennen von Etiketten, Anhängern oder Zutrittsberechtigungsscheinen von der Laminatbahn zu erleichtern.

Bei der Endkonfektionierung der erfindungsgemäßen Laminatbahn werden diese zu Rollen mit festen stabilen Rändern aufgewickelt. Die Rollen enthalten die gewünschte Vielzahl von Etiketten, Aufklebern, Anhängern oder Zutrittsberechtigungsscheinen, beispielsweise von 50 bis 1000, vorzugsweise von 100 bis 500 Einheiten.

Grundsätzlich ist es auch möglich, jedoch nicht bevorzugt, die erfindungsgemäßen Laminatbahnen zu Stapeln, beispielsweise mit Zick-Zack-Faltung zu konfektionieren. Derartige Laminatbahnstapel, beispielsweise vereinzelte Etiketten oder Zutrittsberechtigungsscheine weisen im Bereich der Verdickungsstreifen eine größere Stapelhärte auf als im Mittelbereich. Damit sind größere Stapelhöhen ohne Belastung der Chips möglich.

Die Erfindung wird anhand der nachfolgenden Beispiele noch näher erläutert.

### Beispiel 1

Auf eine 58 mm breite Bahn eines 64 g/m² schweren Siliconpapieres werden auf die siliconisierte Seite selbstklebend ausgerüstete Folientransponder der Abmessungen 96 mm x 48 mm mit einem Rapport von 111 mm aufgespendet. Die RFID-Transponder bestehen aus einer ca. 50 *µ*m dicken PETP-Folie, einer geätzten 45 mm x 76 mm Aluminiumantenne und einem über Flip-Chip-Technik mittig auf der kurzen Antennenbahn aufgebrachten Chip mit einer Stärke von 280 *µ*m.

Mittels einer Düse werden anschließend an den seitlichen Rändern jeweils 10 mm breite Heißschmelzkleberstreifen mit einer Stärke von ca. 20 µm aufgebracht. Auf diese so ausgerüstete Bahn wird nun ein vollflächig selbstklebend ausgerüstetes. 80 µm dickes wärmeempfindliches Aufzeichnungsmaterial mit einem Papierträger und einer darauf angeordneten wärmeempfindlichen Aufzeichnungsschicht aufkaschiert.

Aus diesem Laminatverbund werden im nächsten Schritt Etiketten mit den Abmessungen 105 mm x 55 mm gestanzt und das überflüssige wärmeempfindliche Aufzeichnungsmaterial abgegittert. Die Laminatbahnen mit jeweils 500 Etiketten werden auf eine Rolle so aufgewickelt, daß die Ränder hart gewickelt sind. Im Zentrum mit dem bruchempfindlichen Chips ist die Rolle dagegen weich gewickelt. Das Verhältnis von weicher Wicklung im Mittelbereich zu härterer Wicklung im Randbereich beträgt 33 : 57 N/mm, das entspricht einem relativen Verhältnis von 1 :1,7. Es wurde eine Funktionskontrolle der RFID-Transponder ausgeführt durch Umwickeln und Überprüfung der RFID-Transponder mit einem geeigneten Lesegerät. Alle Transponder waren nach der Integration noch funktionsfähig.

Zum Vergleich wurde eine Laminatbahn ohne die aufgebrachten streifenförmigen Heißschmelzkleberverdickungen hergestellt und zu einer Rolle aufgewickelt, deren absolute Härte im Kantenbereich mit der erfindungsgemäß gewickelten Rolle vergleichbar war.
Bei einer Überprüfung wurde festgestellt, daß diese Vergleichsrolle, die im Mittelbereich nicht weich, sondern durch die integrierten Chips sehr hart gewickelt war, eine Ausfallrate von 13% funktionsunfähigen RFID-Transpondern nach der Integration und Konfektionieren zur Rolle aufwies.

### Beispiel 2

Anstelle der in Beispiel 1 beschriebenen streifenförmigen Klebstoffverdickungen werden während des Kaschiervorganges der Schichten der Laminatbahn selbstklebend ausgerüstete 40 *µ*m dicke Papierstreifen in den Randbereichen der Laminatbahn durch Zulaufen mit einkaschiert.

Die derart ausgebildeten Verdickungsstreifen im Randbereich ermöglichen es, die Etikettenrolle in den Randbereichen hart mit einer Bahnspannung aufzuwickeln, die im mittleren Bereich eine weiche Wicklung ergibt, ohne daß RFID-Transponder beim Integrieren und Konfektionieren zu Rollen funktionsunfähig werden. Das relative Verhältnis von weicher Wicklung zu härterer Wicklung beträgt 1 : 1,4 bis 1,5.

### Beispiel 3

Eine 65 mm breite Transponderbahn auf Basis einer 75 *µ*m dicken Polyesterfolie, einer geätzten Kupferantenne, einem in der Ecke 10 mm vom seitlichen Rand angeordneten Chip, der mit einem Glob Top geschützt, eine Dicke von 780 *µ*m aufweist und einem Rapport von 110 mm wird seitlich vom Chip auf der breiteren Transponderseite ein Acrylharzstreifen aufgebracht. Die Dicke der Acrylharzbeschichtung beträgt 14 *µ*m.

Die Transponderbahn wird auf dieser Seite mit einem 70 *µ* m dicken Etikettenpapier, auf der Rückseite mit einem haftkleberbeschichteten Siliconpapier zusammen laminiert.

Aus diesem Verbundmaterial werden Etiketten der Größe 50 x 100 mm gestanzt und die Laminatbahn zu Rollen mit 500 Etiketten aufgewickelt. Diese Rollen lassen sich hart aufwickeln, wobei der die Chips enthaltende Rand ganz weich bleibt und die Chips vor Bruch bewahrt. Bereits die einseitig feste Wicklung der Rolle mit einem stabilen Rand verhindert das seitliche Teleskopieren der Rolle bei der Handhabung.

### Beispiel 4

Anstelle der in Beispiel 3 beschriebenen Acrylharzbeschichtung wird eine Dispersion eines unter Wärmeeinwirkung expandierenden Acrylpigmentes (Expancel der Fa. Akzo Nobel Casco Products A.B.) aufgetragen. Nach dem Erhitzen wird eine 130 *µ*m dicke Beschichtung als Verdickungsstreifen im Randbereich erhalten.

Auch diese Rolle läßt sich einseitig mit hartem Randbereich und einem weichen Kopf an der Stelle der Transponder herstellen, so daß ein zuverlässiger Schutz gegen von der Beschädigung beim Aufrollen zu stabilen Rollen gewährleistet ist.

### Beispiel 5

Bei einer anderen Ausführungsform werden RFID-Transponder mit den Abmessungen 65 mm x 118 mm eingesetzt. Die Antennengröße beträgt 45 mm x 78 mm. Die Transponderbahn mit einer Kunststoffolie weist an den Seiten 10 mm breite Streifen nicht weggeätzten Aluminiums der Stärke von 30 *µ*m auf. Dieser Randstreifen aus Metall seitlich neben der Antennenwicklung steht nicht in Verbindung mit der Antenne.

Die Dicke des Chips auf der Folientransponderbahn beträgt 150 *µ*m.

Es werden Laminatbahnen hergestellt für Eintrittskarten, indem die Transponderbahn beidseitig mit jeweils 100 *µ*m dickem Papier und üblichem Kaschierklebern zusammenlaminiert wird. Die fertige Laminatbahn hat eine Breite von 118 mm.

Die Laminatbahnen werden auf Längen mit jeweils 250 durch Perforieren quer zur Bahn unterteilte Eintrittskarten geschnitten und so aufgerollt, daß beide Bahnränder hart gewickelt sind und der mittlere Bereich der Rolle weich gewickelt ist.

Eine Funktionskontrolle ergibt, daß weder beim Einlaminieren noch beim Konfektionieren zu Rollen Transponder infolge zu starker Beanspruchung beim Konfektionieren funktionsunfähig geworden sind.

## Patentansprüche

1. Etiketten, Aufkleber, Anhänger oder Zutrittsberechtigungsscheine in Form einer mehrschichtigen Laminatbahn, die in ihrer Längsrichtung eine Vielzahl von hintereinander angeordneten Einheiten von Etiketten, Aufklebern, Anhängern. Zutrittsberechtigungsscheinen mit jeweils darin integrierten RFID-Transpondern mit je einem Chip aufweist, dadurch gekennzeichnet, daß die Laminatbahn an oder in der Nähe der Laminatbahnkanten mindestens auf einer Seite des Chips auf der Bahnoberfläche oder zwischen laminierten Schichten in Längsrichtung der Laminatbahn verlaufende Verdickungsstreifen enthält, deren Dicke ein Bruchteil der Dicke des RFID-Transponders an der Stelle, an der der Chip angeordnet ist, beträgt.

2. Etiketten, Aufkleber, Anhänger oder Zutrittsberechtigungsscheine in Form einer mehrschichtigen Laminatbahn nach Anspruch 1, dadurch gekennzeichnet, daß die Dicke der RFID-Transponder im Bereich des Chips von 50 bis 600 *µ*m und die Dicke der Verdickungsstreifen 1/5 bis 1/4 der Dicke des RFID-Transponders an der Stelle an der der Chip angeordnet ist, beträgt.

3. Etiketten, Aufkleber, Anhänger oder Zutrittsberechtigungsscheine in Form einer mehrschichtigen Laminatbahn nach Anspruch 1 oder 2, dadurch gekennzeichnet, daß die Verdickungsstreifen als Klebstoffstreifen, Lackstreifen, Stanzlochstreifen, eingefügte Materialstreifen, umgefaltete Trägermaterialrandstreifen, Falten in Kunststoffolien, stehengebliebene Metallstreifen bei RFID-Folientranspondern oder durch Einwirkung von Wärme/Strahlung auf die Laminatbahn auslösende Dickenveränderungen einer Materialschicht ausgebildet sind.

4. Etiketten, Aufkleber, Anhänger oder Zutrittsberechtigungsscheine in Form einer mehrschichtigen Laminatbahn nach einem der Ansprüche 1 bis 3, dadurch gekennzeichnet, daß die Laminatbahn mindestens eine oder mehrere Trägerschichten aus Kunststoff, Papier, faserverstärktem Kunststoff, faserverstärktem Papier und eine weitere Schicht aufweist, die fest miteinander verbunden sind und die RFID-Transponder jeder Einheit durch Anordnen zwischen den Tägerschichten, oder zwischen der Trägerschicht und der weiteren Schicht in die Bahn integriert sind.

5. Etiketten, Aufkleber, Anhänger oder Zutrittsberechtigungsscheine in Form einer mehrschichtigen Laminatbahn nach Anspruch 4, dadurch gekennzeichnet, daß die weitere Schicht ein kaltsiegelndes Material, eine Kunststoffolie, eine Papierbahn oder eine Schmelzkleberschicht ist.

6. Etiketten, Aufkleber, Anhänger oder Zutrittsberechtigungsscheine in Form einer mehrschichtigen Laminatbahn einem der Ansprüche 1 bis 3, dadurch gekennzeichnet, daß die Laminatbahn als weitere Schicht eine Haftkleberschicht aufweist, die mit einem von der Haftkleberschicht wieder abziehbaren Deckschicht abgedeckt ist.

7. Etiketten, Aufkleber, Anhänger oder Zutrittsberechtigungsscheine in Form einer mehrschichtigen Laminatbahn, nach einem der Ansprüche 1 bis 6, in Rollenform, wobei mindestens einer der Randbereiche fester gewickelt ist als der mittlere Bereich der Rolle.

8. Etiketten, Aufkleber, Anhänger oder Zutrittsberechtigungsscheine in Form einer mehrschichtigen Laminatbahn nach Anspruch 7, dadurch gekennzeichnet, daß beide Randbereiche der Rolle fester gewickelt sind als der Mittelbereich der Rolle.

9. Etiketten, Aufkleber, Anhänger oder Zutrittsberechtigungsscheine in Form einer mehrschichtigen Laminatbahn nach einem der Ansprüche 1 bis 6, dadurch gekennzeichnet, daß die Laminatbahn die Form eines Stapels hat und mindestens zwei Randbereiche größere Stapelhärte aufweisen als der Mittelbereich des Stapels.

10. Etiketten, Aufkleber, Anhänger oder Zutrittsberechtigungsscheine in Form einer mehrschichtigen Laminatbahn, nach einem der Ansprüche 7, 8 oder 9, dadurch gekennzeichnet, daß das Verhältnis der Wickelhärte oder Stapelhärte im Mittelbereich der Rolle oder des Stapels zum härter gewickelten oder gestapelten Randbereich(en) 1 : ≥ 1,1 beträgt.

## Claims

1. Labels, stickers, tags or access-entitlement slips in the form of a multilayer laminate web which in its longitudinal direction comprises a plurality of units arranged in series, constituted by labels, stickers, tags, access-entitlement slips with, in each instance, RFID transponders integrated therein, each with a chip, characterised in that the laminate web contains, on or in the vicinity of the borders of the laminate web, at least on one side of the chip on the surface of the web or between laminated layers, thickening strips extending in the longitudinal direction of the laminate web, the thickness of which amounts to a fraction of the thickness of the RFID transponder at the place where the chip is arranged.

2. Labels, stickers, tags or access-entitlement slips in the form of a multilayer laminate web according to Claim 1, characterised in that the thickness of the RFID transponders in the region of the chip amounts to from 50 to 600 *µ*m and the thickness of the thickening strips amounts to 1/5 to 1/4 of the thickness of the RFID transponder at the place where the chip is arranged.

3. Labels, stickers, tags or access-entitlement slips in the form of a multilayer laminate web according to Claim 1 or 2, characterised in that the thickening strips take the form of strips of adhesive, strips of lacquer, strips of punched holes, inserted strips of material, folded-over selvedges of carrier material, folds in plastic films, metal strips left behind in the case of RFID foil transponders or changes in the thickness of a layer of material triggered by influence of heat/radiation on the laminate web.

4. Labels, stickers, tags or access-entitlement slips in the form of a multilayer laminate web according to one of Claims 1 to 3, characterised in that the laminate web comprises at least one or more carrier layers made of plastic, paper, fibre-reinforced plastic, fibre-reinforced paper and a further layer, which are firmly connected to one another, and the RFID transponders of each unit are integrated into the web by being arranged between the carrier layers or between the carrier layer and the further layer.

5. Labels, stickers, tags or access-entitlement slips in the form of a multilayer laminate web according to Claim 4, characterised in that the further layer is a cold-sealing material, a plastic film, a paper web or a layer of hot-melt adhesive.

6. Labels, stickers, tags or access-entitlement slips in the form of a multilayer laminate web according to one of Claims 1 to 3, characterised in that by way of further layer the laminate web comprises a layer of contact adhesive which is covered by a covering layer that is capable of being peeled off from the layer of contact adhesive.

7. Labels, stickers, tags or access-entitlement slips in the form of a multilayer laminate web according to one of Claims 1 to 6, in roll form, at least one of the marginal regions being wound more firmly than the central region of the roll.

8. Labels, stickers, tags or access-entitlement slips in the form of a multilayer laminate web according to Claim 7, characterised in that both marginal regions of the roll are wound more firmly than the central region of the roll.

9. Labels, stickers, tags or access-entitlement slips in the form of a multilayer laminate web according to one of Claims 1 to 6, characterised in that the laminate web has the form of a stack and at least two marginal regions exhibit greater stack hardness than the central region of the stack.

10. Labels, stickers, tags or access-entitlement slips in the form of a multilayer laminate web according to one of Claims 7, 8 or 9, characterised in that the ratio of the hardness of winding or hardness of stacking in the central region of the roll or of the stack to the harder-wound or harder-stacked marginal region(s) amounts to 1 : ≥ 1.1.

## Revendications

1. Etiquettes, autocollants, étiquettes à accrocher ou badges d'accès sous la forme d'une bande multicouches de matériau laminé qui comprend dans sa direction longitudinale une multitude d'unités d'étiquettes, d'autocollants, d'étiquettes à accrocher ou de badges d'accès disposées les unes derrière les autres et dans lesquelles sont respectivement intégrés des transpondeurs RF-ID englobant chacun une puce, caractérisés en ce que la bande de matériau laminé comprend sur les bords de la bande de matériau laminé ou à proximité de ceux-ci, au moins sur l'un des côtés de la puce, des rubans d'épaississement s'étendant dans la direction longitudinale de la bande de matériau laminé sur la surface de la bande ou entre des couches assemblées par laminage et dont l'épaisseur constitue à l'endroit où est disposée la puce une fraction de l'épaisseur du transpondeur RF-ID.

2. Etiquettes, autocollants, étiquettes à accrocher ou badges d'accès sous la forme d'une bande multicouches de matériau laminé selon la revendication 1, caractérisés en ce que dans la zone de la puce, l'épaisseur des transpondeurs RF-ID est comprise entre 50 et 600 µm et l'épaisseur des rubans d'épaississement représente 1/5 à 1/4 de l'épaisseur des transpondeurs RF-ID à l'endroit où est disposée la puce.

3. Etiquettes, autocollants, étiquettes à accrocher ou badges d'accès sous la forme d'une bande multicouches de matériau laminé selon la revendication 1 ou 2, caractérisés en ce que les rubans d'épaississement sont réalisés sous forme de cordons de colle, de cordons de laque, de rubans perforés par poinçonnage, de rubans de matériaux rajoutés, de rubans de matériau de support repliés sur les bords, de plis dans des couches en matériau synthétique, de rubans métalliques de transpondeurs RF-ID restés en place ou par des modifications de l'épaisseur d'une couche de matériau produites sous l'effet de la chaleur ou d'un rayonnement sur la bande de matériau laminé.

4. Etiquettes, autocollants, étiquettes à accrocher ou badges d'accès sous la forme d'une bande multicouches de matériau laminé selon l'une des revendications 1 à 3, caractérisés en ce que la bande de matériau laminé comprend au moins une ou plusieurs couches porteuses en matériau synthétique, en papier, en matériau synthétique renforcé de fibres, en papier renforcé de fibres et une couche supplémentaire qui sont fermement reliées entre elles et en ce que les transpondeurs RF-ID de chaque unité sont intégrés dans la bande par leur disposition entre les couches porteuses ou entre la couche porteuse et la couche supplémentaire.

5. Etiquettes, autocollants, étiquettes à accrocher ou badges d'accès sous la forme d'une bande multicouches de matériau laminé selon la revendication 4, caractérisés en ce que la couche supplémentaire est un matériau à scellement à froid, une feuille de matériau synthétique, une bande de papier ou une couche de colle thermoplastique.

6. Etiquettes, autocollants, étiquettes à accrocher ou badges d'accès sous la forme d'une bande multicouches de matériau laminé selon l'une des revendications 1 à 3, caractérisés en ce que la bande de matériau laminé comprend comme couche supplémentaire une couche de colle adhésive qui est recouverte par une couche de recouvrement pouvant être retirée de la couche de colle adhésive.

7. Etiquettes, autocollants, étiquettes à accrocher ou badges d'accès sous la forme d'une bande multicouches de matériau laminé selon l'une des revendications 1 à 6 en forme de rouleau, au moins une des zones marginales étant enroulée de manière plus serrée que la zone centrale du rouleau.

8. Etiquettes, autocollants, étiquettes à accrocher ou badges d'accès sous la forme d'une bande multicouches de matériau laminé selon la revendication 7, caractérisés en ce que les deux zones marginales du rouleau sont enroulées de manière plus serrée que la zone centrale du rouleau.

9. Etiquettes, autocollants, étiquettes à accrocher ou badges d'accès sous la forme d'une bande multicouches de matériau laminé selon l'une des revendications 1 à 6, caractérisés en ce que la bande de matériau laminé a la forme d'une pile et en ce qu'au moins deux zones marginales présentent une dureté d'empilement plus importante que la zone centrale de la pile.

10. Etiquettes, autocollants, étiquettes à accrocher ou badges d'accès sous la forme d'une bande multicouches de matériau laminé selon l'une des revendications 7, 8 ou 9, caractérisés en ce que le rapport de la dureté d'enroulement ou d'empilement entre la zone centrale du rouleau ou de la pile et la(les) zone(s) marginale(s) enroulée(s) ou empilée(s) plus fermement est de 1 : ≥ 1,1.
